(19) **Europäisches Patentamt**
**European Patent Office**
**Office européen des brevets**

(11) **EP 4 478 003 B1**

(12) **FASCICULE DE BREVET EUROPEEN**

(45) Date de publication et mention
de la délivrance du brevet:
**25.03.2026 Bulletin 2026/13**

(21) Numéro de dépôt: **24180168.7**

(22) Date de dépôt: **05.06.2024**

(51) Classification Internationale des Brevets (IPC):
**G01F 1/66** *(2022.01)* **G01F 25/10** *(2022.01)*
**G01M 3/28** *(2006.01)* **G01F 15/00** *(2006.01)*

(52) Classification Coopérative des Brevets (CPC):
**G01F 25/10; G01F 1/66; G01M 3/2876;**
**G01F 15/005**

(54) **COMPTEUR DE FLUIDE DÉTECTANT ET DISTINGUANT UNE FUITE ET UN PROBLÈME D'OFFSET**

FLÜSSIGKEITSZÄHLER ZUR ERKENNUNG UND UNTERSCHEIDUNG VON LECKAGEN UND OFFSET-PROBLEMEN

FLUID METER DETECTING AND DISTINGUISHING LEAKAGE AND OFFSET PROBLEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.06.2023 FR 2306077**

(43) Date de publication de la demande:
**18.12.2024 Bulletin 2024/51**

(73) Titulaire: **SAGEMCOM ENERGY & TELECOM SAS**
**92270 Bois-Colombes (FR)**

(72) Inventeurs:
• **SABRAOUI, Abbas**
**92270 BOIS-COLOMBES (FR)**
• **ABID, Oussama**
**92270 BOIS-COLOMBES (FR)**
• **BASTURK, Ahmet Samed**
**92270 BOIS-COLOMBES (FR)**

(74) Mandataire: **Cabinet Boettcher**
**5, rue de Vienne**
**75008 Paris (FR)**

(56) Documents cités:
EP-A1- 3 954 974     EP-B1- 3 321 644
CA-A1- 2 960 772     JP-B2- 3 557 735
JP-B2- 4 024 110      US-A1- 2008 209 985
US-A1- 2010 132 813   US-B2- 11 085 808

**Description**

L'invention concerne le domaine des compteurs de fluide, et notamment des compteurs de fluide à ultrasons.

ARRIERE PLAN DE L'INVENTION

Un compteur de fluide à ultrasons comporte très classiquement un conduit dans lequel circule le fluide, et un dispositif de mesure ultrasonique comprenant un transducteur amont (côté réseau) et un transducteur aval (côté installation de l'abonné). Chaque transducteur joue successivement le rôle d'un émetteur et d'un récepteur de signaux ultrasonores. Le transducteur amont émet ainsi un signal ultrasonore dans le conduit, qui est reçu par le transducteur aval après avoir parcouru dans le fluide un chemin prédéfini (de longueur parfaitement maîtrisée). Puis, le transducteur aval émet à son tour un signal ultrasonore, qui est reçu par le transducteur amont après avoir parcouru dans le fluide le chemin prédéfini (dans l'autre sens). Le dispositif de mesure ultrasonique évalue alors la vitesse du fluide à partir des temps de transit des signaux ultrasonores, puis le débit du fluide à partir de la vitesse du fluide. L'estimation du débit du fluide permet d'évaluer et de facturer la quantité de fluide consommée. Les documents JP 4024110 B2 et CA 2960772 A2 divulguent des exemples de débitmètre ultrasoniques connus dans l'état de l'art.

Le principe de fonctionnement du dispositif de mesure ultrasonique repose donc sur la mesure des temps de transit des signaux ultrasonores entre les deux transducteurs. Les équations de base sont les suivantes :

$$v = L \ / \ (t\_AB - t\_BA) \ (\text{équation 1}),$$

où v est la vitesse du fluide, L est la distance entre les transducteurs, t_AB est le temps de transit entre le transducteur amont et le transducteur aval, et t_BA est le temps de transit entre le transducteur aval et le transducteur amont.

$$Q = A \ * \ v \ (\text{équation 2}),$$

où Q est le débit volumétrique et A est la section transversale du conduit.

Cependant, en pratique, il est observé qu'à débit nul, le temps de transit entre le transducteur amont et le transducteur aval (t_AB) n'est pas toujours égal au temps de transit entre le transducteur aval et le transducteur amont (t_BA). Ce phénomène est dû aux tolérances mécaniques et électroniques de la chaîne de mesure intégrée dans le dispositif de mesure ultrasonique. Cette différence de temps de transit à débit nul est appelée « erreur d'offset » (que l'on traduit parfois par « erreur de zéro », ou « décalage »), et que l'on appellera « offset » dans le reste de ce document.

Pour éviter de dégrader la précision du compteur, il est donc nécessaire de calibrer le compteur à débit nul afin de prendre en compte sa valeur d'offset.

On obtient alors la vitesse en utilisant l'équation suivante :

$$V = L \ / \ (t\_AB - t\_BA - offset) \ (\text{équation 3}).$$

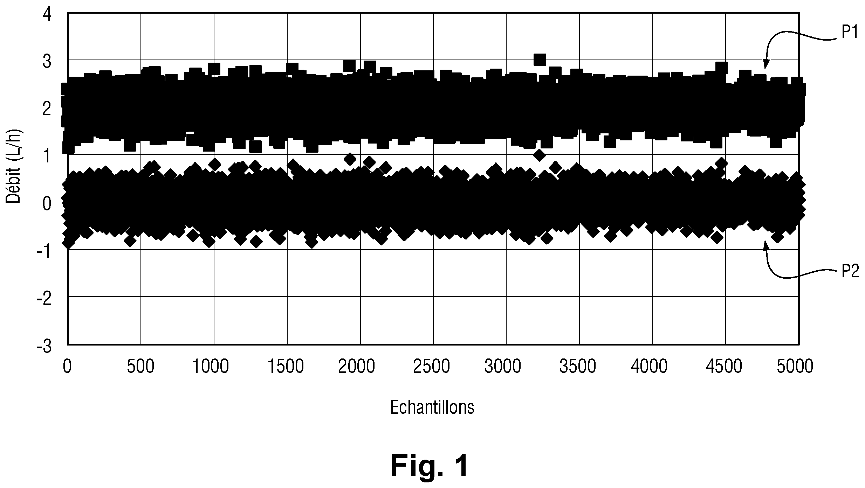

On voit sur la figure 1 un exemple de mesure de l'offset à débit nul d'un compteur d'eau à ultrasons, avant calibration (points P1) et après calibration (points P2). Avant la calibration, on constate que l'offset est centré autour de 2 L/h, ce qui ressemble à une petite fuite de goutte à goutte. La calibration de l'offset vise à ramener la courbe à zéro pour éviter toute mesure erronée.

Cet offset pose un problème bien particulier.

Il est bien sûr très avantageux d'être en mesure de détecter une fuite de fluide dans l'installation en aval du compteur.

On connaît une méthode de l'art antérieur, consistant à détecter une fuite en cherchant la présence d'un débit constant mais non nul. Cependant, une dérive du dispositif de mesure ultrasonique, ou un offset électronique mal calibré, peuvent générer un débit erroné qui peut durer indéfiniment. La valeur de ce débit peut varier en fonction de la température de l'eau.

Il est donc très difficile de faire la différence entre un offset mal calibré et une véritable fuite et ce, d'autant que l'on n'a jamais la certitude que le débit réel est bien nul.

OBJET DE L'INVENTION

L'invention a pour objet, dans un compteur de fluide, de détecter une fuite réelle en aval du compteur ou un problème d'offset, en distinguant correctement ces deux évènements.

RESUME DE L'INVENTION

En vue de la réalisation de ce but, on propose un procédé de surveillance, mis en œuvre dans un compteur de fluide qui comporte :

- un conduit dans lequel un fluide circule ;
- un dispositif de mesure agencé pour mesurer un débit du fluide ;
- une vanne située en amont du dispositif de mesure ;
- une unité de traitement ;

le procédé de surveillance étant mis en œuvre dans l'unité de traitement et comportant une phase préliminaire comprenant l'étape d'acquérir des premières mesures de débit ;
le procédé de surveillance comportant en outre une phase de détection, réalisée lorsque le débit demeure non nul et inférieur à un premier seuil prédéterminé pendant au moins une durée prédéterminée, et comprenant les étapes de :

- vérifier que la vanne est ouverte et, si c'est le cas, fermer la vanne ;
- acquérir au moins une deuxième mesure de débit ;
- détecter une fuite de fluide si le débit est nul.

Lorsque le débit demeure non nul et faible pendant une durée relativement importante, cela signifie qu'il est possible qu'une fuite soit présente dans l'installation en aval du compteur, ou bien que le dispositif de mesure présente un problème d'offset. La fermeture de la vanne permet alors de créer un débit nul (de manière certaine), ce qui permet de détecter et de distinguer ces deux évènements.

On propose de plus un procédé de surveillance tel que précédemment décrit, dans lequel la phase de détection comprend les étapes, suite à l'acquisition de la au moins une deuxième mesure de débit, si le débit n'est pas nul, de :

- vérifier au moins une première condition, comprenant une première condition primaire, qui est que le débit est constant ;
- si la au moins une première condition est vérifiée, détecter un problème d'offset dans le dispositif de mesure.

On propose de plus un procédé de surveillance tel que précédemment décrit, dans lequel la au moins une première condition comprend aussi une première condition secondaire, qui est que le débit est inférieur à un deuxième seuil prédéterminé.

On propose de plus un procédé de surveillance tel que précédemment décrit, dans lequel la phase de détection comprend les étapes, suite à l'acquisition de la au moins une deuxième mesure de débit, si le débit n'est pas nul, de :

- vérifier au moins une deuxième condition, comprenant une deuxième condition primaire, qui est que le débit est variable ;
- si la au moins une deuxième condition est vérifiée, détecter un défaut de fonctionnement de la vanne.

On propose de plus un procédé de surveillance tel que précédemment décrit, dans lequel la au moins une deuxième condition comprend aussi une deuxième condition secondaire, qui est que le débit est supérieur à un troisième seuil prédéterminé.

On propose de plus un procédé de surveillance tel que précédemment décrit, dans lequel la phase de détection comprend l'étape de calculer un écart type sur un nombre prédéfini de deuxièmes mesures de débit, la première condition primaire étant vérifiée lorsque l'écart-type est inférieur à un seuil d'écart prédéterminé, la deuxième condition primaire étant vérifiée lorsque l'écart type est supérieur au seuil d'écart prédéterminé.

On propose de plus un procédé de surveillance tel que précédemment décrit, dans lequel la phase de détection comprend, suite à l'étape de vérification que la vanne est ouverte, si la vanne est fermée, de détecter un problème d'offset dans le dispositif de mesure.

On propose de plus un procédé de surveillance tel que précédemment décrit, dans lequel la phase préliminaire comprend en outre l'étape d'acquérir des mesures d'une température du fluide, le procédé de surveillance comprenant en outre l'étape de réitérer la phase de détection à chaque fois que la température du fluide a varié d'au moins un seuil de température prédéfini depuis la phase de détection précédente.

On propose de plus un procédé de surveillance tel que précédemment décrit, la phase de détection étant mise en œuvre la nuit.

On propose de plus un procédé de surveillance tel que précédemment décrit, comprenant en outre l'étape, à partir du moment où une fuite ou un problème d'offset ou un défaut de fonctionnement de la vanne a été détectée, de comptabiliser séparément une consommation d'eau par l'installation.

On propose de plus un compteur de fluide, comportant :

- un conduit dans lequel un fluide peut circuler ;
- un dispositif de mesure agencé pour mesurer un débit du fluide ;
- une vanne située en amont du dispositif de mesure ;
- une unité de traitement dans laquelle est mis en œuvre le procédé de surveillance tel que précédemment décrit.

On propose de plus un compteur de fluide tel que précédemment décrit, le dispositif de mesure étant un dispositif de mesure ultrasonique.

On propose de plus un programme d'ordinateur comprenant des instructions qui conduisent l'unité de traitement du compteur tel que précédemment décrit à exécuter les étapes du procédé de surveillance tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés parmi lesquels :

[Fig. 1] la figure 1 représente un graphique comprenant des points de mesure d'un bruit électronique à débit nul avant calibration, et des points de mesure de ce bruit après calibration ;
[Fig. 2] la figure 2 représente un compteur d'eau à ultrasons ;
[Fig. 3] la figure 3 représente des étapes du procédé de surveillance.

DESCRIPTION DETAILLEE DE L'INVENTION

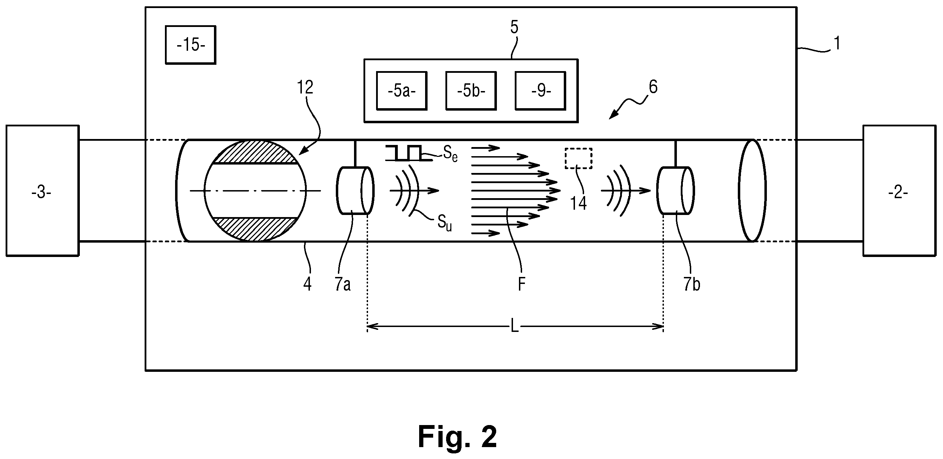

En référence à la figure 2, l'invention est mise en œuvre dans un compteur de fluide à ultrasons 1. Le compteur 1 est en l'occurrence ici un compteur d'eau, qui est utilisé pour mesurer la consommation d'eau de l'installation 2 d'un abonné. L'eau est fournie à l'installation 2 par un réseau de distribution d'eau 3.

Le compteur 1 comporte un conduit 4 dans lequel circule l'eau fournie par le réseau 3 à l'installation 2. L'eau circule dans le conduit 4 d'amont en aval, comme cela est indiqué par le sens des flèches F. Ici, par « en amont », on entend du côté du réseau 3, et par « en aval », on entend du côté de l'installation 2.

Le compteur 1 comporte une unité de traitement 5 (électronique et logicielle). L'unité de traitement 5 comprend au moins un composant de traitement 5a, qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). Le circuit de traitement 5 comprend aussi une ou des mémoires 5b, reliées à ou intégrées dans le composant de traitement 5a. Au moins l'une de ces mémoires 5b forme un support d'enregistrement lisible par ordinateur, sur lequel est enregistré au moins un programme d'ordinateur comprenant des instructions qui conduisent le composant de traitement 5a à exécuter au moins certaines des étapes du procédé de surveillance qui sera décrit plus bas.

Le compteur 1 comprend aussi un dispositif de mesure ultrasonique 6. Le dispositif de mesure ultrasonique 6 est utilisé pour mesurer le débit d'eau fourni à l'installation 2 par le réseau 3.

Le dispositif de mesure ultrasonique 6 comporte un transducteur amont 7a et un transducteur aval 7b. Le dispositif de mesure ultrasonique 6 comporte aussi un module de traitement 9 relié au transducteur amont 7a et au transducteur aval 7b. Le module de traitement 9 est ici implémenté dans l'unité de traitement 5.

Le transducteur amont 7a et le transducteur aval 7b sont avantageusement (mais pas nécessairement) appairés. Le transducteur amont 7a et le transducteur aval 7b sont ici des transducteurs piézoélectriques.

Chaque transducteur 7a, 7b joue successivement le rôle d'un émetteur et d'un récepteur de signaux ultrasonores.

Le module de traitement 9 génère un signal électrique d'excitation Se, et fournit à l'émetteur le signal électrique d'excitation. L'émetteur génère alors un signal ultrasonore Su. Le récepteur reçoit le signal ultrasonore après que celui-ci a parcouru dans le fluide un chemin prédéfini, et le module de traitement 9 mesure le temps de transit.

Le chemin prédéfini est ici un chemin direct (parallèle par rapport à un axe longitudinal du conduit 4, comme c'est le cas sur la figure 1, ou incliné par rapport audit axe). Le chemin prédéfini pourrait aussi être un chemin indirect : les signaux ultrasonores sont alors réfléchis contre la paroi interne du conduit (éventuellement contre des réflecteurs eux-mêmes situés sur la paroi interne).

Le chemin prédéfini a une longueur L, qui est connue très précisément.

Ainsi, le transducteur amont 7a émet tout d'abord le signal ultrasonore, qui est reçu par le transducteur aval 7b. Le module de traitement 9 mesure le temps de transit entre le transducteur amont et le transducteur aval.

Puis, le transducteur aval 7b émet le signal ultrasonore, qui est reçu par le transducteur amont 7a. Le module de traitement 9 mesure le temps de transit entre le transducteur aval et le transducteur amont.

Le module de traitement 9 calcule la vitesse de l'écoulement de l'eau à partir des temps de transit, puis le débit de l'eau à partir de la vitesse.

Le compteur 1 comprend aussi une vanne 12 qui permet de laisser passer l'eau ou de couper le débit d'eau. La vanne 12 est donc une vanne à deux positions.

La vanne 12 est une vanne motorisée (électromécanique) : il s'agit d'une électrovanne. La vanne 12 comprend un organe mobile qui s'étend dans le conduit 4. Ici, la vanne 12 est une vanne à bille et l'organe mobile est donc une bille. La position angulaire de la bille peut donc être pilotée soit pour couper le débit, soit pour laisser passer l'eau.

On note que la vanne 12 pourrait aussi être une vanne multi-positions permettant de réguler, limiter ou couper le débit d'eau. Dans ce cas, la vanne 12 n'est pas uniquement dédiée à la mise en œuvre du procédé de surveillance décrit ici, mais pourrait aussi remplir une autre fonction, et par exemple permettre au distributeur d'eau et/ou au gestionnaire du réseau de couper ou de limiter le débit d'eau en cas d'impayés.

La vanne 12 est positionnée, selon une longueur du conduit 4, en amont des deux transducteurs 7a, 7b.

Le compteur 1 comprend aussi un capteur de température 14, qui mesure une température de l'eau dans le compteur 1.

Le compteur 1 comprend de plus un module de communication 15 qui est susceptible de mettre en œuvre tout type de communication, et par exemple une communication via un réseau cellulaire de type 2G, 3G, 4G, Cat-M ou NB-IOT, une communication selon le protocole LoRa, selon le protocole W-Mbus, une communication radio selon le standard *Wize* opérant à la fréquence de 169MHz, etc.

On décrit maintenant le principe de l'invention.

Si la vanne 12 est ouverte et que le compteur 1 mesure un débit non nul, pendant une durée relativement importante, de plusieurs heures typiquement, il existe trois possibilités :

- soit il y a une véritable fuite en aval du compteur 1, qui se produit donc soit dans l'installation 2 de l'abonné, soit à l'interface entre l'aval du compteur 1 et l'installation 2 (dans le cas par exemple où le compteur 1 est mal connecté) ;
- soit le dispositif de mesure 6 a un problème d'offset (offset mal calibré ou dérive de l'offset en fonction du temps et/ou de la température) ;
- soit la vanne 12 présente un défaut de fonctionnement.

Le procédé de surveillance comporte tout d'abord une phase préliminaire au cours de laquelle l'unité de traitement 5 acquiert des premières mesures de débit.

Si, au cours de la phase préliminaire, le débit demeure non nul et inférieur à un premier seuil prédéterminé pendant au moins une durée prédéterminée, l'unité de traitement 5 démarre une phase de détection.

Le premier seuil prédéterminé est par exemple égal à 3 L/h ou 5 L/h. La durée prédéterminée est par exemple égale à 1 h ou 2 h.

Lors de la phase de détection, l'unité de traitement 5 vérifie tout d'abord que la vanne 12 est bien ouverte.

Si la vanne 12 est fermée, l'unité de traitement 5 détecte un problème d'offset dans le dispositif de mesure 6. En effet, le débit mesuré aurait dû être nul (car le débit réel est bien nul, la vanne 12 étant fermée).

Si la vanne 12 est bien ouverte, l'unité de traitement 5 ferme la vanne 12.

L'unité de traitement 5 acquiert au moins une deuxième mesure de débit, en l'occurrence ici plusieurs deuxièmes mesures de débit.

L'unité de traitement 5 détecte alors une fuite d'eau si le débit est nul. En fermant la vanne 12, on a en effet généré un débit réellement nul. Si le dispositif de mesure 6 mesure correctement ce débit nul, cela signifie qu'il n'y a pas de problème d'offset ni de problème sur la vanne 12.

Par contre, suite à l'acquisition de la au moins une deuxième mesure de débit, si le débit n'est pas nul, l'unité de traitement 5 :

- vérifie au moins une première condition, comprenant une première condition primaire, qui est que le débit est constant ;
- si la au moins une première condition est vérifiée, détecte un problème d'offset dans le dispositif de mesure 6.

Ici, la au moins une première condition comprend aussi une première condition secondaire, qui est que le débit est inférieur à un deuxième seuil prédéterminé.

Le deuxième seuil prédéterminé est ici égal à 5 L/h.

En effet, si le débit mesuré n'est pas nul mais constant, comme un débit réellement nul a été généré, cela signifie que le dispositif de mesure 6 dysfonctionne et, plus précisément, qu'il y a un problème d'offset dans le dispositif de mesure 6.

Suite à l'acquisition de la au moins une deuxième mesure de débit, si le débit n'est pas nul, l'unité de traitement 5 :

- vérifie au moins une deuxième condition, comprenant une deuxième condition primaire, qui est que le débit est variable ;
- si la au moins une deuxième condition est vérifiée, détecter un défaut de fonctionnement de la vanne 12.

Ici, la au moins une deuxième condition comprend aussi une deuxième condition secondaire, qui est que le débit est supérieur à un troisième seuil prédéterminé.

Le troisième seuil prédéterminé est ici égal à 10 L/h.

En effet, si le débit mesuré n'est pas nul mais variable, comme un débit réellement nul a été généré, cela signifie que la vanne 12 dysfonctionne.

Suite à l'acquisition de la au moins une deuxième mesure de débit, si le débit n'est pas nul, l'unité de traitement 5 vérifie donc si le débit est constant (première condition primaire) ou variable (deuxième condition primaire).

Pour cela, l'unité de traitement 5 calcule un écart-type sur un nombre prédéfini des deuxièmes mesures de débit, la première condition primaire étant vérifiée lorsque l'écart-type est inférieur à un seuil d'écart prédéterminé (ici inférieur ou égal), la deuxième condition primaire étant vérifiée lorsque l'écart-type est supérieur au seuil d'écart prédéterminé (ici strictement supérieur).

Le nombre prédéfini est par exemple égal à 10.

Le seuil d'écart prédéterminé est par exemple égal à 1 L/h.

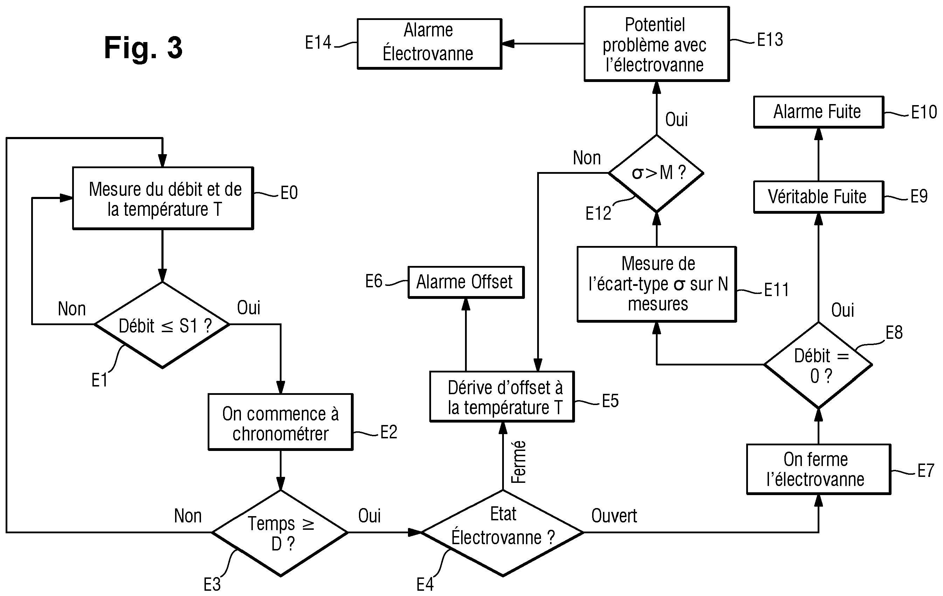

On décrit maintenant, en référence à la figure 3, un mode de réalisation particulier du procédé de surveillance.

Le procédé débute à l'étape E0.

L'unité de traitement 5 met en œuvre la phase préliminaire et acquiert les premières mesures de débit.

L'unité de traitement 5 compare le débit avec le premier seuil prédéterminé S1 : étape E1.

S1 est par exemple égal à 3 L/h ou 5 L/h.

Tant que le débit est supérieur à S1 (ici strictement), le procédé reboucle sur l'étape E0 puis sur l'étape E1.

Lorsque le débit devient inférieur à S1 (ici inférieur ou égal), tout en étant non nul, l'unité de traitement 5 démarre un chronomètre : étape E2.

L'unité de traitement 5 vérifie si le débit demeure non nul et inférieur au premier seuil prédéterminé S1 pendant au moins une durée prédéterminée D (ici égale par exemple à 1 h ou 2 h) : étape E3.

Si ce n'est pas le cas, le procédé repasse à l'étape E0.

Si c'est le cas, la phase de détection débute. Le procédé passe à l'étape E4. L'unité de traitement 5 vérifie que la vanne 12 est ouverte.

Si la vanne 12 est fermée, l'unité de traitement 5 détecte un problème d'offset dans le dispositif de mesure 6 : étape E5.

L'unité de traitement 5 produit un message d'alarme indiquant ce problème d'offset : étape E6.

A l'étape E4, si la vanne 12 est ouverte, l'unité de traitement 5 ferme la vanne 12 : étape E7.

L'unité de traitement 5 vérifie si le débit est nul : étape E8.

Si c'est le cas, elle détecte une fuite « véritable » (étape E9), et elle produit un message d'alarme indiquant la présence de cette fuite : étape E10.

Si ce n'est pas le cas, l'unité de traitement 5 vérifie la première condition primaire et la deuxième condition primaire (dans ce mode de réalisation, la au moins une première condition comprend uniquement la première condition primaire et la au moins une deuxième condition comprend uniquement la deuxième condition primaire).

La vérification de la première condition primaire et de la deuxième condition primaire consiste tout d'abord à mesurer l'écart-type $\sigma$ sur le nombre prédéfini (ici égal par exemple à 10) de deuxièmes mesures de débit : étape E11.

L'unité de traitement 5 vérifie si l'écart-type $\sigma$ est supérieur au seuil d'écart prédéterminé M (ici strictement supérieur) : étape E12. Le seuil d'écart prédéterminé est par exemple égal à 1 L/h.

Si ce n'est pas le cas, le procédé passe à l'étape E5 : l'unité de traitement 5 détecte un problème d'offset dans le dispositif de mesure 6. L'unité de traitement 5 produit un message d'alarme indiquant ce problème d'offset : étape E6.

Si c'est le cas, l'unité de traitement 5 détecte un défaut de fonctionnement de la vanne 12 : étape E13. L'unité de traitement 5 produit un message d'alarme indiquant ce problème lié à la vanne 12 : étape E14.

Aux étapes E6, E10 et E14, les messages d'alarmes sont remontés au distributeur d'eau et/ou au gestionnaire du réseau via le module de communication 15. Les messages d'alarme peuvent aussi être transmis à l'utilisateur. Les alarmes peuvent être affichées sur l'écran du compteur 1.

Il est recommandé de répéter la phase de détection pour différentes températures de l'eau. Il se peut en effet que le compteur 1 ne mesure pas de débit non nul et inférieur au premier seuil prédéterminé à une ou des températures données, mais mesure un tel débit à une ou d'autres températures.

Cette situation est observée par exemple en cas de dérive de l'offset en fonction de la température. Par exemple, l'offset peut être bien calibré à 20°C, mais pas à 40°C, de sorte que le compteur 1 ne mesurera pas de débit non nul à 20°C (dans le cas où par exemple la vanne 12 est fermée), tandis qu'à une température proche de 40°C, il mesurera un faux débit.

Ainsi, au cours de la phase préliminaire, et donc à l'étape E0 sur la figure 2, l'unité de traitement 5 acquiert aussi des mesures de la température de l'eau produites par le capteur de température 14.

A l'étape E5, le problème d'offset est associé à la température du fluide ; le message d'alarme remonté comprend donc aussi ladite température.

La phase de détection est répétée à chaque fois que la température du fluide a varié d'au moins un seuil de température prédéfini depuis la phase de détection précédente.

Le seuil de température prédéfini est par exemple égal à 5° (il peut s'agir d'une hausse ou d'une baisse de la température).

Optionnellement, à partir du moment où une fuite ou un problème d'offset ou un défaut de fonctionnement de la vanne 12 a été détecté, l'unité de traitement 5 comptabilise séparément une consommation d'eau par l'installation 2. On distingue ainsi la consommation globale, totale de l'installation 2, de la consommation de l'installation 2 à partir du moment où l'anomalie a été détectée.

Ceci permet au distributeur d'eau et/ou au gestionnaire du réseau et/ou à l'utilisateur de prendre des mesures pour corriger et éventuellement compenser les problèmes de facturation résultant de cette anomalie.

On notera qu'il est avantageux de mettre en œuvre les phases de détection pendant la nuit. Les phases de détection nécessitent en effet de fermer la vanne 12 pendant quelques instants, ce qui coupe le débit d'eau.

Il est aussi avantageux de réaliser les deuxièmes mesures avec une fréquence élevée (exemple : plusieurs mesures par secondes), ce qui permet de limiter le temps de fermeture de la vanne 12.

Les avantages procurés par l'invention sont les suivants.

L'invention permet d'effectuer une surveillance continue et précise du débit et de la température du fluide.

Elle permet une identification rapide des problèmes potentiels, tels que les fuites, les problèmes d'offset électronique et les problèmes liés à la vanne. Elle permet donc aussi de réaliser une intervention rapide et efficace pour corriger le problème.

L'invention minimise les perturbations pour l'utilisateur grâce à une intervention limitée sur la vanne.

Le compteur transmet, de manière proactive, des notifications des problèmes détectés au distributeur d'eau et/ou au gestionnaire du réseau et/ou au client, par le biais de messages d'alarmes qui sont soit affichés sur l'écran du compteur 1, soit envoyées par le module de communication 15.

Comme on l'a vu, il est possible de comptabiliser séparément le volume d'eau consommé en cas de problème identifié, permettant ainsi une meilleure gestion de la consommation globale du client.

Ainsi, l'invention offre une solution efficace et proactive pour la surveillance et la gestion des problèmes liés au débit et à la température des fluides, tout en maintenant une expérience utilisateur optimale pour l'utilisateur (client final).

Bien entendu, l'invention n'est pas limitée au mode de réalisation décrit mais englobe toute variante entrant dans le champ de l'invention telle que définie par les revendications.

L'invention s'applique bien sûr quels que soient le positionnement et la configuration du transducteur amont et du transducteur aval. Les signaux ultrasonores peuvent être émis avec une orientation d'un angle quelconque par rapport à un axe longitudinal du conduit.

Le chemin prédéfini entre les transducteurs n'est pas nécessairement un chemin direct. Les signaux ultrasonores, émis et reçus dans le conduit par les transducteurs peuvent par être par exemple réfléchis par des réflecteurs (par exemple par des miroirs orientés à 45°).

Le compteur de fluide n'est pas nécessairement un compteur à ultrasons.

L'invention ne s'applique pas uniquement à un compteur d'eau, mais à tout compteur de tout fluide : gaz, pétrole, etc.

La vanne n'est pas nécessairement une vanne à bille. Tout type de vanne peut être utilisé pour couper le débit, par exemple une vanne à tiroir.

## Revendications

**1.** Procédé de surveillance, mis en œuvre dans un compteur de fluide (1) qui comporte :

- un conduit (4) dans lequel un fluide circule ;
- un dispositif de mesure (6) agencé pour mesurer un débit du fluide ;
- une vanne (12) située en amont du dispositif de mesure ;

- une unité de traitement (5) ;

le procédé de surveillance étant mis en œuvre dans l'unité de traitement et comportant une phase préliminaire comprenant l'étape d'acquérir des premières mesures de débit ;

le procédé de surveillance est **caractérisé en ce qu'**il comporte en outre une phase de détection, réalisée lorsque le débit demeure non nul et inférieur à un premier seuil prédéterminé (S1) pendant au moins une durée prédéterminée (D), et comprenant les étapes de :

- vérifier que la vanne (12) est ouverte et, si c'est le cas, fermer la vanne ;
- acquérir au moins une deuxième mesure de débit ;
- détecter une fuite de fluide si le débit est nul.

2. Procédé de surveillance selon la revendication 1, dans lequel la phase de détection comprend les étapes, suite à l'acquisition de la au moins une deuxième mesure de débit, si le débit n'est pas nul, de :

- vérifier au moins une première condition, comprenant une première condition primaire, qui est que le débit est constant ;
- si la au moins une première condition est vérifiée, détecter un problème d'offset dans le dispositif de mesure (6).

3. Procédé de surveillance selon la revendication 2, dans lequel la au moins une première condition comprend aussi une première condition secondaire, qui est que le débit est inférieur à un deuxième seuil prédéterminé.

4. Procédé de surveillance selon l'une des revendications précédentes, dans lequel la phase de détection comprend les étapes, suite à l'acquisition de la au moins une deuxième mesure de débit, si le débit n'est pas nul, de :

- vérifier au moins une deuxième condition, comprenant une deuxième condition primaire, qui est que le débit est variable ;
- si la au moins une deuxième condition est vérifiée, détecter un défaut de fonctionnement de la vanne (12).

5. Procédé de surveillance selon la revendication 4, dans lequel la au moins une deuxième condition comprend aussi une deuxième condition secondaire, qui est que le débit est supérieur à un troisième seuil prédéterminé.

6. Procédé de surveillance selon les revendications 2 et 4, dans lequel la phase de détection comprend l'étape de calculer un écart type sur un nombre prédéfini de deuxièmes mesures de débit, la première condition primaire étant vérifiée lorsque l'écart-type est inférieur à un seuil d'écart prédéterminé (M), la deuxième condition primaire étant vérifiée lorsque l'écart type est supérieur au seuil d'écart prédéterminé.

7. Procédé de surveillance selon l'une des revendications précédentes, dans lequel la phase de détection comprend, suite à l'étape de vérification que la vanne (12) est ouverte, si la vanne est fermée, de détecter un problème d'offset dans le dispositif de mesure (6).

8. Procédé de surveillance selon l'une des revendications précédentes, dans lequel la phase préliminaire comprend en outre l'étape d'acquérir des mesures d'une température du fluide, le procédé de surveillance comprenant en outre l'étape de réitérer la phase de détection à chaque fois que la température du fluide a varié d'au moins un seuil de température prédéfini depuis la phase de détection précédente.

9. Procédé de surveillance selon l'une des revendications précédentes, la phase de détection étant mise en œuvre la nuit.

10. Procédé de surveillance selon l'une des revendications précédentes, comprenant en outre l'étape, à partir du moment où une fuite ou un problème d'offset ou un défaut de fonctionnement de la vanne (12) a été détectée, de comptabiliser séparément une consommation d'eau par l'installation (2).

11. Compteur de fluide (1), comportant :

- un conduit (4) dans lequel un fluide peut circuler ;
- un dispositif de mesure (6) agencé pour mesurer un débit du fluide ;
- une vanne (12) située en amont du dispositif de mesure ;
- une unité de traitement (5) dans laquelle est mis en œuvre le procédé de surveillance selon l'une des revendications précédentes.

12. Compteur de fluide selon la revendication 11, le dispositif de mesure étant un dispositif de mesure ultrasonique.

13. Programme d'ordinateur comprenant des instructions qui conduisent l'unité de traitement (5) du compteur (1) selon l'une des revendications 11 ou 12 à exécuter les étapes du procédé de surveillance selon l'une des revendications 1 à 10.

14. Support d'enregistrement lisible par ordinateur, sur lequel est enregistré le programme d'ordinateur selon la revendication 13.


**Patentansprüche**

1. Überwachungsverfahren, das in einem Fluidzähler (1) ausgeführt wird, welcher enthält:

   - eine Leitung (4), in der ein Fluid zirkuliert;
   - eine Messvorrichtung (6), die dafür ausgelegt ist, einen Fluiddurchfluss zu messen;
   - ein Ventil (12), das der Messvorrichtung vorgeschaltet ist;
   - eine Verarbeitungseinheit (5);
   wobei das Überwachungsverfahren in der Verarbeitungseinheit ausgeführt wird und eine Vorbereitungsphase enthält, welche den Schritt umfasst, dass erste Durchfluss-Messwerte erfasst werden; **dadurch gekennzeichnet, dass** das Überwachungsverfahren ferner eine Detektionsphase enthält, welche ausgeführt wird, wenn der Durchfluss während zumindest einer vorbestimmten Zeitdauer (D) ungleich null und kleiner als ein erster vorbestimmter Schwellenwert (S1) bleibt und welche die Schritte umfasst, dass:

   - überprüft wird, ob das Ventil (12) offen ist, und, wenn dies der Fall ist, das Ventil geschlossen wird;
   - zumindest ein zweiter Durchfluss-Messwert erfasst wird;
   - eine Fluidleckage erkannt wird, wenn der Durchfluss gleich null ist.

2. Überwachungsverfahren nach Anspruch 1, wobei, wenn nach der Erfassung des zumindest einen zweiten Durchfluss-Messwerts der Durchfluss ungleich null ist, die Detektionsphase die Schritte umfasst, dass:

   - zumindest eine erste Bedingung überprüft wird, welche eine erste primäre Bedingung umfasst, nämlich dass der Durchfluss konstant ist;
   - nach erfolgter Überprüfung der zumindest einen ersten Bedingung, ein Offset-Problem in der Messvorrichtung (6) erkannt wird.

3. Überwachungsverfahren nach Anspruch 2, wobei die zumindest eine erste Bedingung auch eine erste sekundäre Bedingung umfasst, nämlich dass der Durchfluss kleiner als ein vorbestimmter zweiter Schwellenwert ist.

4. Überwachungsverfahren nach einem der vorhergehenden Ansprüche, wobei nach der Erfassung des zumindest einen zweiten Durchfluss-Messwerts, wenn der Durchfluss ungleich null ist, die Detektionsphase die Schritte umfasst, dass:

   - zumindest eine zweite Bedingung überprüft wird, welche eine zweite primäre Bedingung umfasst, nämlich dass der Durchfluss variabel ist;
   - nach erfolgter Überprüfung der zumindest einen zweiten Bedingung eine Fehlfunktion des Ventils (12) erkannt wird.

5. Überwachungsverfahren nach Anspruch 4, wobei die zumindest eine zweite Bedingung auch eine zweite sekundäre Bedingung umfasst, nämlich dass der Durchfluss größer als ein dritter vorbestimmter Schwellenwert ist.

6. Überwachungsverfahren nach den Ansprüchen 2 und 4, wobei die Detektionsphase den Schritt umfasst, dass eine Standardabweichung für eine vorgegebene Anzahl von zweiten Durchfluss-Messwerten berechnet wird, wobei die erste primäre Bedingung überprüft wird, wenn die Standardabweichung kleiner ist als ein vorbestimmter Abweichungsschwellenwert (M), wobei die zweite primäre Bedingung überprüft wird, wenn die Standardabweichung größer ist als der vorbestimmte Abweichungsschwellenwert.

7. Überwachungsverfahren nach einem der vorhergehenden Ansprüche, wobei nach dem Schritt, in welchem überprüft wird, ob das Ventil (12) offen ist, die Detektionsphase bei geschlossenem Ventil den Schritt umfasst, dass ein Offset-Problem in der Messvorrichtung (6) erkannt wird.

8. Überwachungsverfahren nach einem der vorhergehenden Ansprüche, wobei die Vorbereitungsphase ferner den Schritt umfasst, dass Messwerte einer Fluidtemperatur erfasst werden, wobei das Überwachungsverfahren ferner den Schritt umfasst, dass jedes Mal, wenn sich die Fluidtemperatur seit der vorhergehenden Detektionsphase um zumindest einen vorgegebenen Temperaturschwellenwert verändert hat, die Detektionsphase wiederholt wird

9. Überwachungsverfahren nach einem der vorhergehenden Ansprüche, wobei die Detektionsphase in der Nacht ausgeführt wird.

10. Überwachungsverfahren nach einem der vorhergehenden Ansprüche, ferner den Schritt umfassend, dass ab dem Zeitpunkt, an dem eine Leckage oder ein Offset-Problem oder eine Fehlfunktion des Ventils (12) erkannt worden ist, ein Wasserverbrauch der Anlage (2) separat verrechnet wird.

11. Fluidzähler (1), enthaltend:

   - eine Leitung (4), in der ein Fluid zirkulieren kann;
   - eine Messvorrichtung (6), die dafür ausgelegt ist, einen Fluiddurchfluss zu messen;
   - ein Ventil (12), das der Messvorrichtung vorgeschaltet ist;
   - eine Verarbeitungseinheit (5), in welcher das Überwachungsverfahren nach einem der vorhergehenden Ansprüchen ausgeführt wird.

12. Fluidzähler nach Anspruch 11, wobei es sich bei der Messvorrichtung um eine Ultraschall-Messvorrichtung handelt.

13. Computerprogramm, das Befehle umfasst, welche die Verarbeitungseinheit (5) des Zählers (1) nach einem der Ansprüche 11 oder 12 dazu veranlassen, die Schritte des Überwachungsverfahrens nach einem der Ansprüche 1 bis 10 auszuführen.

14. Computerlesbares Speichermedium, auf welchem das Computerprogramm nach Anspruch 13 abgespeichert ist.


**Claims**

1. Monitoring method, implemented in a fluid meter (1) which comprises:

   - a conduit (4), wherein a fluid circulates;
   - a measuring device (6) arranged to measure a flow rate of the fluid;
   - a valve (12) located upstream of the measuring device;
   - a processing unit (5);
   the monitoring method being implemented in the processing unit and comprising a preliminary phase comprising the step of acquiring first flow rate measurements;
   the monitoring method being **characterized in that** it further comprises a detection phase, carried out when the flow rate remains non-zero and less than a predetermined first threshold (S1), for at least one predetermined duration (D), and comprising the steps of:

      - verifying that the valve (12) is open and, if this is the case, closing the valve;
      - acquiring at least one second flow rate measurement;
      - detecting a fluid leak if the flow rate is zero.

2. Monitoring method according to claim 1, wherein the detection phase comprises the steps, following the acquisition of the at least one second flow rate measurement, if the flow rate is not zero, of:

      - verifying at least one first condition, comprising a first primary condition, which is that the flow rate is constant;
      - if the at least one first condition is verified, detecting an offset problem in the measuring device (6).

3. Monitoring method according to claim 2, wherein the at least one first condition also comprises a first secondary condition, which is that the flow rate is less than a predetermined second threshold.

4.  Monitoring method according to one of the preceding claims, wherein the detection phase comprises the steps, following the acquisition of the at least one second flow rate measurement, if the flow rate is not zero, of:

    - verifying at least one second condition, comprising a second primary condition, which is that the flow rate is variable;
    - if the at least one second condition is verified, detecting an operating defect of the valve (12).

5.  Monitoring method according to claim 4, wherein the at least one second condition also comprises a second secondary condition, which is that the flow rate is greater than a predetermined third threshold.

6.  Monitoring method according to claims 2 and 4, wherein the detection phase comprises the step of calculating a standard deviation over a predefined number of second flow rate measurements, the first primary condition being verified when the standard deviation is less than a predetermined difference threshold (M), the second primary condition being verified when the standard deviation is greater than the predetermined difference threshold.

7.  Monitoring method according to one of the preceding claims, wherein the detection phase comprises, following the verification step, that the valve (12) is open, if the valve is closed, of detecting an offset problem in the measuring device (6).

8.  Monitoring method according to one of the preceding claims, wherein the preliminary phase further comprises the step of acquiring measurements of a temperature of the fluid, the monitoring method further comprising the step of repeating the detection phase each time that the temperature of the fluid has varied from at least one predefined temperature threshold from the preceding detection phase.

9.  Monitoring method according to one of the preceding claims, the detection phase being implemented at night.

10. Monitoring method according to one of the preceding claims, further comprising the step, from the moment when a leak or an offset problem or an operating defect of the valve (12) has been detected, of separately accounting for a water consumption by the installation (2).

11. Fluid meter (1), comprising:

    - a conduit (4) wherein a fluid can circulate;
    - a measuring device (6) arranged to measure a flow rate of the fluid;
    - a valve (12) located upstream of the measuring device;
    - a processing unit (5), wherein the monitoring method according to one of the preceding claims is implemented.

12. Fluid meter according to claim 11, the measuring device being an ultrasonic measuring device.

13. Computer program comprising instructions which make the processing unit (5) of the meter (1) according to one of claims 11 or 12 execute the steps of the monitoring method according to one of claims 1 to 10.

14. Computer-readable recording medium, on which the computer program according to claim 13 is recorded.

Fig. 1

EP 4 478 003 B1

**Fig. 2**

EP 4 478 003 B1

**Fig. 3**

Mesure du débit et de la température T — E0

Débit ≤ S1 ? — E1 — Non (loop back) / Oui

On commence à chronométrer — E2

Temps ≥ D ? — E3 — Non / Oui

État Électrovanne ? — E4 — Fermé / Ouvert

Dérive d'offset à la température T — E5

Alarme Offset — E6

On ferme l'électrovanne — E7

Débit = 0 ? — E8 — Oui

Véritable Fuite — E9

Alarme Fuite — E10

Mesure de l'écart-type σ sur N mesures — E11

σ > M ? — E12 — Non / Oui

Potentiel problème avec l'électrovanne — E13

Alarme Électrovanne — E14

**EP 4 478 003 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 4024110 B

- CA 2960772 A2